(19) Europäisches Patentamt
European Patent Office
Office européen des brevets

(11) EP 3 943 985 A1

(12) EUROPEAN PATENT APPLICATION

(43) Date of publication:
26.01.2022 Bulletin 2022/04

(51) International Patent Classification (IPC):
$G01V\ 3/22^{(2006.01)}$ $G01V\ 3/24^{(2006.01)}$

(21) Application number: 21185559.8

(52) Cooperative Patent Classification (CPC):
G01V 3/24

(22) Date of filing: 14.07.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.07.2020 US 202016933725

(71) Applicants:
• Saudi Arabian Oil Company
Dhahran 31311 (SA)
• Services Petroliers Schlumberger (SPS)
75007 Paris (FR)
Designated Contracting States:
FR
• Schlumberger Technology B.V.
2514 JG The Hague (NL)
Designated Contracting States:
AL AT BE BG CH CY CZ DE DK EE ES FI GB GR
HR HU IE IS IT LI LT LU LV MC MK MT NL NO PL
PT RO RS SE SI SK SM TR

(72) Inventors:
• MARSALA, Alberto
31311 Dhahran (SA)
• ZHANG, Ping
Sugar Land, 77478 (US)

(74) Representative: Mewburn Ellis LLP
Aurora Building
Counterslip
Bristol BS1 6BX (GB)

(54) SYSTEM AND METHOD FOR MAPPING AND MONITORING RESERVOIRS BY ELECTROMAGNETIC CROSSWELL AND OPTIMIZING PRODUCTION

(57) A technological solution for locating and evaluating resistive targets in a space between a pair of wellbores, at least one of which includes a metallic casing. The solution includes injecting an electric current into the metallic casing of one of the pair of wellbores to energize the metallic casing as a dipole transmitter and leak the current into a formation to form variable electric fields; detecting inside the other wellbore of the pair, by an electric field receiver, the variable electric fields; and measuring, by the electric field receiver, the variable electric fields as a function of time; and generating a resistivity map of the formation based on the measurements of the variable electric fields.

FIG. 2

## Description

### FIELD OF THE DISCLOSURE

The present disclosure relates to a technological solution comprising a system and methodology for locating and evaluating potentially bypassed hydrocarbon in interwell or surrounding reservoirs to provide increased production of hydrocarbon resources from existing producing fields. The disclosure also relates to a technology solution comprising a system and methodology for mapping and monitoring interwell or surrounding reservoirs, and for guiding extraction of hydrocarbon from such reservoirs.

### BACKGROUND OF THE DISCLOSURE

Geological formations defining a reservoir for the accumulation of hydrocarbons in the subsurface of the earth can contain a network of interconnected paths in which fluids are disposed that ingress or egress from the reservoir. Knowledge of both pore fluids and porosity of the geological formations can help determine the nature and behavior of the fluids in the network. With this knowledge, an efficient and effective assessment can be made of hydrocarbon reservoirs.

For instance, the electrical resistivity of geological formations can be a function of both porosity of the formations and resistivity of the fluids. Since hydrocarbons tend to be electrically insulating, and most formation water tends to be saline and, therefore, electrically conductive, resistivity measurements can provide valuable data to determine the presence of hydrocarbon reservoirs in geological formations. Accordingly, using resistivity measurements, changes in hydrocarbon content can be measured and monitored while production of the hydrocarbon can be permitted to proceed and water saturation to increase.

In industries such as oil and gas, methods and tools are employed that can determine the electrical resistivity of geological formations surrounding and between wellbores. Such methods and tools can include a deep-reading electromagnetic (EM) field surveying system that is sensitive to interwell structures in formations that are located away from the immediate surroundings of a wellbore. The system can involve large scale measurements from the subsurface-to-wellbore, or between wellbores. The tools or methods are designed to measure responses of the reservoir between wellbores, which can be kilometers apart. This is in contrast to established logging methods, which are confined to the immediate vicinity of the wellbores - typically, within a radial distance of a meter or less from the wellbore. The deep-reading EM field surveying system can be applied for measuring and determining parameters of the formations at distances of up to kilometers from the location of the sensors. The measured EM field data can be used to model the reservoir and surrounding media.

### SUMMARY OF THE DISCLOSURE

The inventors have identified a great and unmet need for a technological solution that can accurately and effectively locate and evaluate potentially bypassed hydrocarbons in reservoirs located between wellbores or within a predetermined distance from a wellbore. The disclosure provides such a technological solution. The technological solution comprises a crosswell system and methodology that can be arranged to accurately and effectively detect, evaluate and monitor resistive targets underground, including carbon dioxide ($CO_2$) and hydrocarbons, such as, for example, crude oil, natural gas, coal, or other hydrocarbon-based energy source. The solution can be arranged to detect and measure electromagnetic (EM) fields due to telluric currents that can be transmitted through a casing transmitter and measure and evaluate resistive targets. The solution can be arranged to detect and measure both an electric field and magnetic field using electric and magnetic receivers in a wellbore to efficiently, effectively and accurately map and monitor resistive bodies far away from a surveyed well.

In a nonlimiting embodiment, the solution includes a method for locating and evaluating resistive targets in a space between a pair of wellbores, at least one of which includes a metallic casing. The method comprises: injecting an electric current into the metallic casing of one of the pair of wellbores to energize the metallic casing as a dipole transmitter and leak the current into a formation to form variable electric fields; detecting, by an electric field receiver, the variable electric fields; and measuring, by the electric field receiver, the variable electric fields as a function of time; and generating a resistivity map of the formation based on the measurements of the variable electric fields.

The method can further comprise: forming a telluric electrical circuit; or installing a counter-electrode within a predetermined distance of said one of the pair of wellbores; or connecting a power supply to the metallic casing of said one of the pair of wellbores.

In the method, the electric field receiver can comprise an electric dipole receiver or a capacitive receiver that does not contact the formation.

In the method, the predetermined distance can be between 10 meters and 20 meters, or between 20 meters and 30 meters, or between 30 meters and 1,000 meters.

In the method, the metallic casing of said one of the pair of wellbores, the formation and the counter-electrode can form a telluric electrical circuit.

In a further nonlimiting embodiment, the solution includes a system for locating and evaluating resistive targets in a space between a pair of wellbores, at least one of which includes a metallic casing. The system comprises: an electrode arranged to connect to the metallic casing of one of the pair of wellbores to energize the metallic casing as a dipole transmitter and leak a current into a formation to form variable electric fields; a counter-electrode located within a predetermined distance, the counter-electrode being arranged to receive the current; and an electric field receiver located in another of the pair wellbores, the electric field receiver being arranged to detect and measure the variable electric fields to detect and measure resistive targets in the formation.

The system can comprise: a telluric electrical circuit through which the current travels; or a power supply arranged to connect to the metallic casing of said one of the pair of wellbores.

In the system, the power supply can be arranged to connect to the counter-electrode.

In the system, the telluric electrical circuit can comprise the metallic casing of said one of the pair of wellbores, the formation and the counter-electrode.

In the system, the electric field receiver can comprise an electric dipole receiver or a capacitive receiver that does not contact the formation.

In the system, the predetermined distance can be between 10 meters and 20 meters, between 20 meters and 30 meters, or between 30 meters and 1,000 meters.

Additional features, advantages, and embodiments of the disclosure may be set forth or apparent from consideration of the detailed description and drawings. Moreover, it is to be understood that the foregoing summary of the disclosure and the following detailed description and drawings provide non-limiting examples that are intended to provide further explanation without limiting the scope of the disclosure as claimed.

## BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description explain the principles of the disclosure. No attempt is made to show structural details of the disclosure in more detail than may be necessary for a fundamental understanding of the disclosure and the various ways in which it may be practiced.

FIG. 1 shows a nonlimiting example of a field surveying system that can be used with crosswell EM field surveying methods to accurately detect and evaluate hydrocarbon accumulations in reservoirs, especially when used with water injection.
FIG. 2 shows a nonlimiting embodiment of an Xwell CSE field surveying system, constructed according to the principles of the disclosure.
FIG. 3 shows another nonlimiting embodiment of the Xwell CSE field surveying system, constructed according to the principles of the disclosure.
FIG. 4 shows a nonlimiting embodiment of a switching system that can be included in the system shown in FIGS. 2 or 3.
FIG. 5 shows a nonlimiting embodiment of a receiver station that can be included in the system shown in FIGS. 2 or 3.
FIG. 6 shows an example of a field surveying process, according to the principles of the disclosure.

The present disclosure is further described in the detailed description that follows.

## DETAILED DESCRIPTION OF THE DISCLOSURE

The disclosure and its various features and advantageous details are explained more fully with reference to non-limiting embodiments and examples described or illustrated in the accompanying drawings and detailed in the following description. It should be noted that features illustrated in the drawings are not necessarily drawn to scale, and features of one embodiment can be employed with other embodiments as those skilled in the art would recognize, even if not explicitly stated. Descriptions of well-known components and processing techniques can be omitted so as not to unnecessarily obscure the embodiments or examples of the disclosure. The examples used are intended merely to facilitate an understanding of ways in which the disclosure can be practiced and to further enable those skilled in the art to practice the embodiments of the disclosure. Accordingly, the examples and embodiments should not be construed as limiting the scope of the disclosure. Moreover, it is noted that like reference numerals represent similar parts throughout the several views of the drawings.

Improved Oil Recovery (IOR) and Enhanced Oil Recovery (EOR) techniques are commonly used in the oil and gas industry to accurately target geological formations of hydrocarbons not capable of being detected or produced with conventional production methods. IOR can include any recovery methodology that goes beyond using conventional naturally-flowing vertical production wells to identify and recover hydrocarbons, which otherwise would be out of reach of naturally-flowing vertical production wells. IOR can include any of a variety of production technologies, ranging from, for example, infill drilling utilizing additional vertical wells to complex well designs, such as, for example, horizontal wells, deviated wells, slanted wells, or single or multilateral wells. IOR can involve various specialized technologies, such as, for example, well simulation, artificial lift, secondary recovery techniques, or tertiary or EOR recovery technologies.

EOR technologies can be applied to reservoirs, including interwell reservoirs, to identify and extract hydrocarbons that otherwise might go undetected in spaces or regions between wellbores or within the surroundings of a wellbore. EOR technologies frequently involve injecting fluids or surfactants into reservoirs to assist in hydrocarbon production by means other than simply supplying external reservoir energy. The injection of fluids can include a water-alternating-gas (WAG) process, wherein water injection and gas injection are carried out alternately for periods of time to provide better sweep efficiency and reduce gas channeling from injector to producer wells. Gas injection can include a reservoir maintenance or recovery process that uses injected gas such as carbon-dioxide ($CO_2$) to supplement the pressure in the oil reservoir, such as, for example, through a distribution of gas-injection wells to maintain reservoir pressure and effect an efficient sweep of recoverable fluids. The WAG process can be used in, for example, $CO_2$ floods to improve hydrocarbon contact time and sweep efficiency of the $CO_2$.

The particular EOR technology employed for a given reservoir can depend on the particulars of the reservoir, including, for example, the fluids contained in the reservoir, the reservoir's susceptibility to water or $CO_2$ flooding, or the type and nature of capillary forces trapping the hydrocarbons within the reservoir. Evaluating the sweep efficiency and locating potentially bypassed hydrocarbon accumulation in reservoirs is a critical challenge that prevents efficient and effective production of hydrocarbons from existing producing fields. Similarly, in monitoring EOR and IOR mechanisms, there exists a critical and unmet need to map fluid fronts located, for example, hundreds or thousands of meters away from a wellbore, including fluid fronts containing a resistive gas such as $CO_2$.

Formation resistivity is one of the key attributes that can experience substantial variations during the WAG process. Therefore, mapping formation resistivity variations can be used to monitor a flood front of the WAG process. A single well logging technique can provide accurate and timely geophysical measurements of the formation resistivity. However, the depth of investigation of single well logging tools (not shown) are limited to within a few meters from the wellbore. Any attempt to acquire resistivity information on a reservoir scale requires other techniques that are capable of large depth investigation.

Crosswell electromagnetic (EM) field surveying methods have proven effective and accurate in detecting and evaluating hydrocarbon accumulations in reservoirs, as well as detecting and monitoring EOR mechanisms. Due to their effectiveness, crosswell EM field surveying methods are frequently used to map reservoirs. Although the methods may differ in some respects, they are all similar in that they use an induction system that consists of an EM tool equipped with a magnetic field transmitter in one wellbore and a plurality of magnetic field receivers in another, nearby wellbore.

Since the EM tool used in crosswell systems is induction-based, it has very high sensitivity for conductive targets, but low sensitivity for resistive targets. Due to its electrically conductive properties when underground, water is frequently used with EOR processes. Since injected water operates as an excellent target for crosswell EM field survey methods, it is frequently used to sweep hydrocarbons in reservoirs. However, EOR processes that use injected $CO_2$ may not work as well as injected water, or at all with crosswell EM field surveying methods.

Unlike water, which is typically a good electrical conductor underground, $CO_2$ is typically resistive and a poor electrical conductor, resultantly making it a poor or obscure target for magnetic field induction systems such as those used in crosswell EM systems. Therefore, there exists an urgent unmet need for a technological solution that can work effectively and accurately with EOR processes that might use injected gases such as, for example, $CO_2$, which are typically poor electrical conductors (good electrical insulators) and highly resistive.

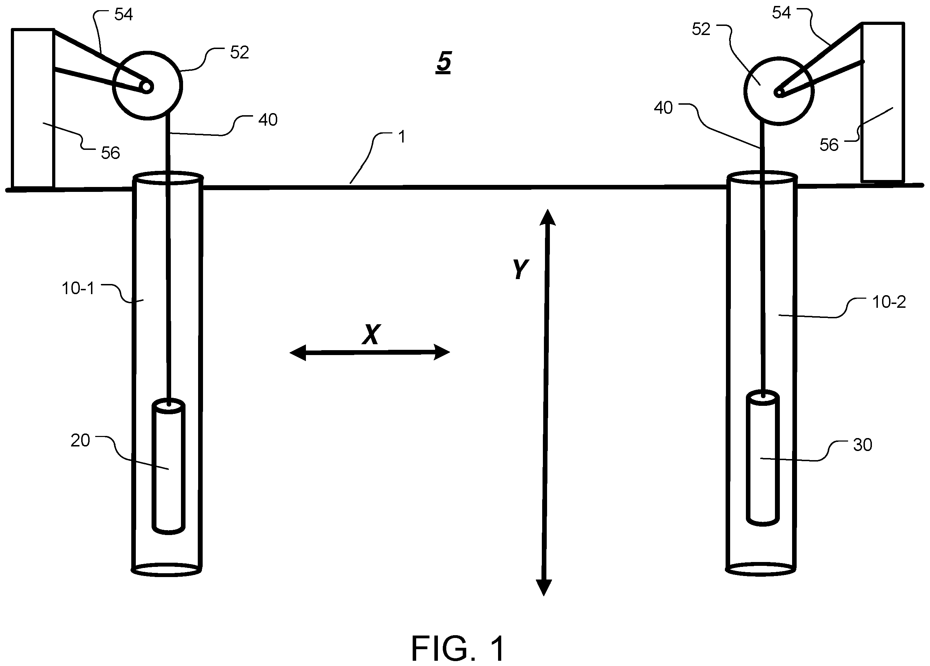

FIG. 1 shows an example of a field surveying system 5 that can be used with crosswell EM field surveying methods to accurately detect and evaluate hydrocarbon accumulations in reservoirs, especially when used with water injection. The system 5 requires use of at least two wellbores 10 (10-1 and 10-2) that are spaced a distance apart and have a depth range over which interwell measurements can be made. The system 5 includes an EM tool consisting of a magnetic field transmitter 20 and a magnetic field receiver 30. During crosswell EM field surveying, the magnetic field transmitter 20 is placed in one of the wellbores 10 (10-1) and the magnetic field receiver 30 is placed in the other wellbore 10 (10-2). The field transmitter 20 is arranged to generate a magnetic field throughout the underground medium. At the second wellbore 10-2, the magnetic field is detected and measured by the magnetic field receiver 30, which can include an array of coil receivers. Whenever possible, the transmitter 20 and receiver 30 are placed at regularly spaced intervals below, within, and above the depth range of interest, using, for example, a cable 40 and a pulley system 52, which can be attached to a support 54 and base 56.

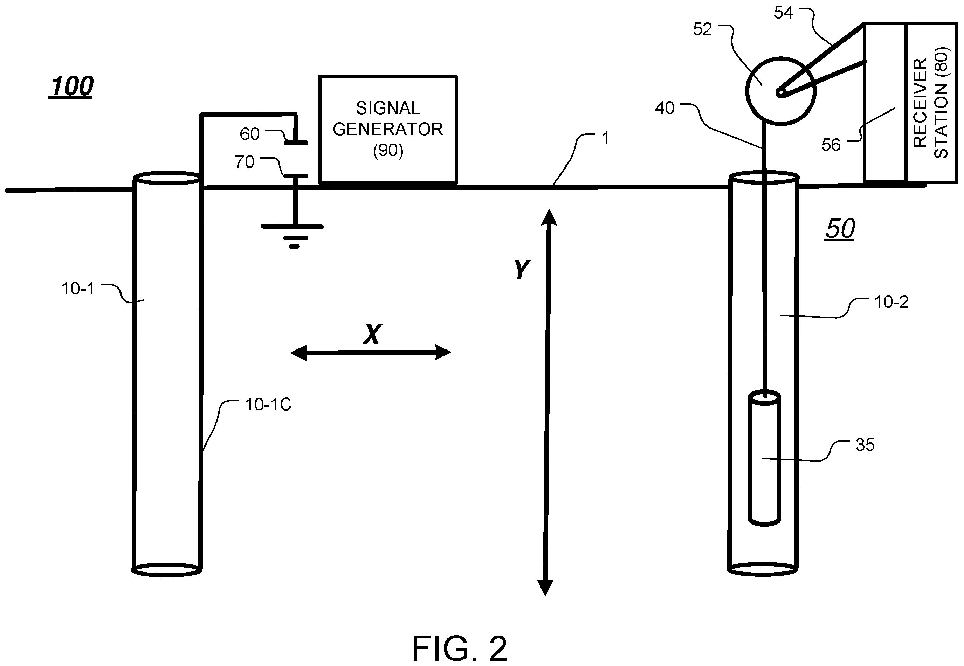

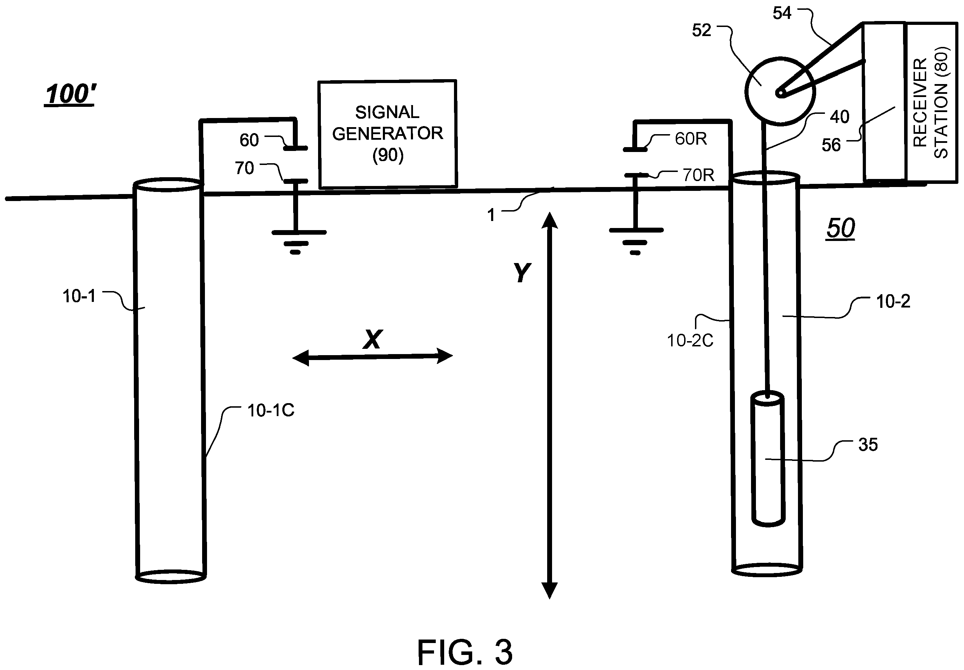

The cable 40 can include one or more communication links arranged to transmit signals between the transmitter or receiver and one or more electronic devices, such as, for example, the receiver station 80 (shown in FIGS. 2 or 3) or the signal generator 90 (shown in FIGS. 2 or 3). The signal generator 90 can be arranged to generate and supply a signal to the transmitter 20 to generate an EM field. The receiver station 80 can be arranged to receive a magnetic field measurement signal from the magnetic coils in the receiver 30, in response to sensing the magnetic field generated by the transmitter 20.

The support 54 can include a motor (not shown) that is arranged to drive and operate the pulley system 52. The motor (not shown) can be operated to lower, raise or hold the cable 40 at a particular location in the wellbore 10, thereby moving the transmitter 20 or receiver 30 along a length of the wellbore 10, or holding the transmitter 20 or receiver 30 at a particular location for a period of time. The transmitter 20 (or receiver 30) can be stopped and held at a plurality of discrete locations along the length of the wellbore 10. The base 56 can be fixed to the ground 1 or a vehicle (not shown), such as, for example, a truck, tractor, or trailer.

The measurement signals can be supplied from the receiver 30 to the receiver station 80 (shown in FIGS. 2 or 3), where magnetic field data can be collected from the measurement signals. The magnetic field data can be interpreted by the receiver station 80 and used to generate image data for the interwell space. The receiver station 80 can be arranged to generate a two-dimensional (2D) or three-dimensional (3D) resistivity or water saturation model of the reservoir. The magnetic field data can be collected, for example, using standard wireline logging conveyance with the transmitter 20 and receiver 30 connected by communication links.

The transmitter 20 can include, for example, an electronics cartridge (not shown) and a fairly large antenna (not shown), such as, for example, between about 8 centimeters (cm) and about 10 cm in diameter, and between about 4 meters (m) and about 5 m long. Other dimensions for the antenna are contemplated here, including diameters less than 8 cm or greater than 10 cm, or lengths of less than 4 m or greater than 5 m. The dimensions of the antenna should be such that the antenna can generate a sufficient moment to transmit a signal across large distances. The transmitter 20 can be arranged to generate and transmit an EM field that has x, y and z vectors, with the x-axis being substantially perpendicular to the wellbore 10-1, the y-axis being substantially parallel to the wellbore 10-1, and the z-axis (not shown) being perpendicular to both the x-axis and y-axis.

The receiver 30 can include multilevel coil strings (not shown), which can be resultantly quite long, for example, longer than the transmitter antenna length. The receiver 30 can be arranged to sense the magnetic field generated by the transmitter 20.

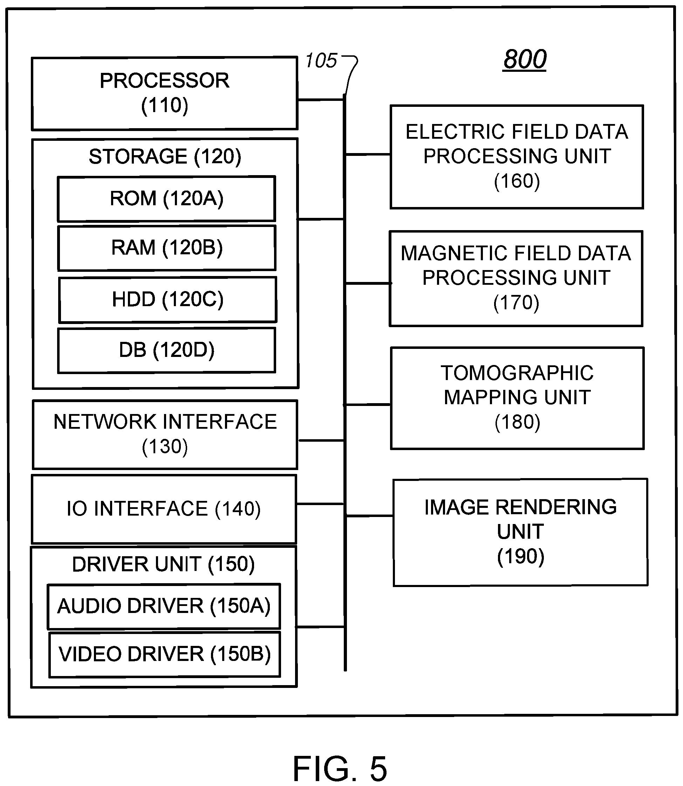

The field data collected by receiver station 80 (shown in FIGS. 2 or 3), when used with the system 5, can have a dataset of several thousand to hundreds of thousands, or more measurements, which can be interpreted together to provide an interwell resistivity map. The field data can be interpreted by the receiver station 80 fitting the measurements to calculated data from a numerical model using an inversion procedure that includes, for example, a finite difference algorithm or any other suitable inversion algorithm to calculate the magnetic fields with a 2D or 3D rectangular grid. The inversion process can begin with a resistivity model, which can be derived from prior knowledge of the field area including well logs, geologic and seismic data; and, using the model and a forward EM code, the inversion process can calculate the forward EM response and then adjust the model parameters, under certain constraints, until the observed and calculated data fit within a specified tolerance for acceptance. The computing device (for example, processor 110, shown in FIG. 5), which can execute and drive the sensitivity and inversion algorithms, can be arranged to calculate the magnetic fields within the 2D or 3D grid. Since the inversion process can result in non-unique models for resistivity maps in the interwell space, this condition can be addressed by, for example, applying previously known data, such as, logs, formation tests, or well performance history, and exercising reasonable model constraints for fitting the data.

While crosswell EM field surveying systems and methodologies (such as the filed surveying system 5, shown in FIG. 1) can be very useful in modeling reservoirs located in regions or spaces between wellbores, they can be inadequate or less efficient in certain real-world applications, such as, for example, where wellbores are spaced at distances of about 1,000 meters (1 km) or more apart, or where the wellbores comprise metal casings, or where it is impractical, undesirable or too costly to occupy multiple injection or production wells for field surveying applications, or where it might to costly or take too long to install wellbores dedicated for field surveying applications. Effectively, efficiently and accurately evaluating the sweep efficiency and locating potentially bypassed hydrocarbon accumulations in reservoirs in such real-world applications remains elusive and a critical challenge, which must be addressed in order to increase production from existing producing fields. Also, in monitoring EOR and IOR mechanisms, there remains a critical and unmet need to map fluid fronts at large distances away from wellbores, such as for example, hundreds of meters or more than a thousand meters from a wellbore. The technological solution provided in this disclosure meets and exceeds those needs and others, as will be evident to those skilled in the art after reading the disclosure.

The system shown in FIG. 1 can be very effective and provide high-resolution imaging of the interwell space between the wellbores 10 where the wellbores 10-1 and 10-2 are non-metallic and the EOR process uses injected water. However, if one or both wellbores 10-1, 10-2 includes a metallic casing, the system 5 (shown in FIG. 1) can become unusable where the wellbores 10-1 and 10-2 are spaced more than, for example, 700 m apart. That is, the EM signal generated by the transmitter 20 is attenuated by the metallic casing of the wellbore 10-1 so much so that any measurements taken by the magnetic coil receiver 30 in the wellbore 10-2 will be useless, due to, for example, noise that renders any measurements undiscernible.

Additionally, where the EOR process includes a fluid such as $CO_2$ gas, the system 5 can be incapable of detecting or measuring the $CO_2$ or $CO_2$ flooding. Since the system 5 uses an EM tool that is induction-based, thereby making it ineffective or incapable of detecting or measuring resistive targets such as CO2 at any notable distance between the wellbores 10-1 and 10-2, especially at distances that are on the order of hundreds or thousands of meters (for example, > 1km).

Indeed, when using the system 5 with metal-cased wellbores 10, the attenuation of the EM signal, by the metallic casing of the wellbore 10-1, can be so severe that any measurements taken by the magnetic receiver 30 in the wellbore 10-2 will be insufficient or undiscernible to detect, much less map or monitor the interwell space or any IOR or EOR mechanisms used in the interwell space.

For instance, if only one of the wellbores 10-1 and 10-2 has a metal casing 10-1C (shown in FIG. 2), then the EM signal generated by the transmitter 20 (or received by the receiver 30) is attenuated by the metallic casing such that potentially usable measurements can be acquired for up to a maximum of about 700 meters, or less, from the wellbore 10-1 provided with the transmitter 20. However, if both wellbores 10-1 and 10-2 have metallic casings, then the EM signal is attenuated both at the transmitter and receiver ends such that potentially usable measurements cannot be acquired between the wellbores 10-1, 10-2. Since the distance between wellbores 10-1 and 10-2 is typically more than 1,000 meters (1km) in real-world applications, the system 5 is incapable of providing usable measurements necessary for tomographic imaging of the interwell space or reservoir in applications that use a steel-cased wellbore at one or both of the transmitter and receiver ends.

Additionally, the system 5 requires that the wellbores 10-1 and 10-2 be parallel to each other for tomographic imaging to work, and that both wellbores 10-1 and 10-2 not be operated as injection or production sites during the entire field surveying process, which can be very costly considering that the wellbores 10-1 and 10-2 are rendered nonoperational for hydrocarbon production or injection of fluids (liquid or gas) such as during the WAG process.

The solution includes a system and methodology for detecting, measuring, mapping, monitoring or evaluating subsurface reservoirs, and for detecting, mapping, monitoring or evaluating IOR or EOR mechanisms, including WAG processes. The solution includes mapping and monitoring resistive targets such as hydrocarbons and $CO_2$ far away (for example, hundreds or thousands of meters) from a surveyed well to identify bypassed hydrocarbon accumulation, or to map and monitor an EOR process. The solution can operate to evaluate the sweep efficiency and locate potentially bypassed hydrocarbon accumulations in a reservoir interwell volume for increased production of hydrocarbons from existing producing fields, even where the wellbores are located about one thousand meters (>1 km) or more apart from each other. The solution can operate with existing steel-cased wellbores to monitor EOR and IOR mechanisms to map fluid fronts hundreds of meters, or more, away from a wellbore. The solution is arranged to map resistive bodies (for example, hydrocarbons and $CO_2$) in a conductive background (for example, salty water) hundreds of meters or kilometers away from the surveyed wellbores.

In a nonlimiting embodiment, the solution includes a system 100 (shown in FIG. 2) or 100' (shown in FIG. 3) comprising a crosswell controlled source electric ("Xwell CSE") architecture that is specifically designed for detecting, mapping and monitoring resistive targets such as hydrocarbons and $CO_2$, as well as conductive targets such as water. The Xwell CSE system 100 (or 100') is arranged to employ the steel casing 10-1C (shown in FIG. 2) of the existing wellbore 10-1 as a transmitter to generate an electric field underground. The Xwell CSE system 100 (or 100') can include a receiver system 50 arranged to detect and measure an electric field due to a telluric current transmitted through the steel casing 10-1C of the wellbore 10-1. The receiver system 50 can comprise the magnetic receiver 30 (shown in FIG. 1) arranged to detect and measure a magnetic field that is due to the telluric current transmitted through the steel casing 10-1C.

The receiver system 50 can include an electric field receiver such as, for example, an electrical dipole (not shown) or a capacitive receiver (not shown). The electric field receiver can be arranged to detect the electric fields due to the telluric current, as well as variations in the electric fields due to resistive materials (including resistive targets) in the interwell space. The electric field receiver can be arranged to measure the magnitude and direction of each electric field vector as a function of time, thereby measuring variations in the electric fields due to resistive targets.

The magnetic field receiver 30 (shown in FIG. 1) can include, for example, an induction coil, a magnetic coil or an array of magnetic coils. The magnetic field receiver 30 can be arranged to detect the magnetic fields due to the telluric current, as well as variations in the magnetic fields due to conductive materials (including conductive targets such as water) in the interwell space. The magnetic field receiver 30 can be arranged to measure the magnitude and direction of each magnetic field vector as a function of time, thereby measuring variations in the magnetic fields due to conductive targets.

The receiver system 50 can be arranged to have sensitivity to resistive targets such as hydrocarbons or $CO_2$, as well as conductive targets such as water. The receiver system 50 can be arranged to supply measurement signals via one or more communication links to the receiver station 80 (shown in FIGS. 2 or 3), which can be located above ground or remotely. The measurement signals can include measurements for resistive targets or conductive targets, or both resistive targets and conductive targets.

Hence, unlike the system 5 (shown in FIG. 1), or other similar surveying methods that are typically limited to measuring and monitoring only electro-conductive targets such as water, the Xwell CSE system 100 (or 100') can detect, measure, map and monitor resistive targets such as hydrocarbons or $CO_2$ in reservoirs, including producing reservoirs, as well as electrically conductive targets such as water. Additionally, the Xwell CSE system 100 (or 100') does not require that multiple wellbores 10 be rendered inoperative for injection or production during the surveying process, thereby greatly reducing operating costs and down time of production or injection wellbores.

FIG. 2 shows a nonlimiting embodiment of the Xwell CSE field surveying system 100, constructed according to the principles of the disclosure. The system 100 can be arranged operate with existing injection or production wellbores 10, or it can be deployed as a permanent configuration to facilitate repeated measurements in time lapse and field monitoring. The system 100 can be arranged to, among other things, enhance resolution and detectability of subsurface targets such as hydrocarbons, gases (for example, $CO_2$), and fluids in formations through transmission and reception of crosswell telluric currents. The system 100 includes a receiver system 50, a transmitter electrode 60 and a transmitter counter-electrode 70. The system 100 can include the receiver station 80 and the signal generator 90. The electrode 60 can be attached to the steel-casing 10-1C of the wellbore 10-1 and the counter-electrode 70 can be grounded.

The system 100 can operate with one or both wellbores 10-1 and 10-2 comprising a steel casing. If only one of the wellbores (10-1) has a steel casing (10-1C), then that wellbore would be operated as a dipole transmitter. If both of the wellbores 10-1 and 10-2 have steel casings 10-1C and 10-2C, respectively (shown in FIG. 3), then one of the wellbores 10 can be operated as dipole transmitter and the other wellbore 10 can be operated as a dipole receiver.

The system 100 can be arranged to operate the wellbore 10-1 as a dipole transmitter by injecting an electrical current from the signal generator 90 into the electrodes 60, 70, resulting in the entire steel casing 10-1C operating as a giant electrical dipole transmitter (for example, 1 km, 2 km, 3 km, or longer). Since the steel casing 10-1C is in physical contact with the formation, the current flow through the steel casing 10-1C is leaked into the formation, resulting in creation of telluric currents. The telluric currents, due to formation resistivity, can be measured as electric fields by the receiver system 50 in the wellbore 10-2.

The receiver system 50 can include a receiver 35, which can have an electric field receiver or the magnetic field receiver 30 (shown in FIG. 1). The electric field receiver can include an electric dipole receiver, such as, for example, the steel casing 10-2C of the wellbore 10-2 (shown in FIG. 3). The electric field receiver can include a capacitive receiver that does not require contact with underground formations. The electric field receiver can be arranged to detect and measure the electric fields due to formation telluric currents. As mentioned above, the magnetic field receiver 30 can include an array of coil receivers. The receiver system 50 can be arranged measure the electric field and magnetic field due to the telluric currents and supply electric field measurements and magnetic field measurements to the receiver station 80. The receiver station 80 can include the receiver station 800, shown in FIG. 5.

The receiver 35 can be connected to the cable 40, pulley system 52, support 54 and base 56, as seen in FIGS. 2 or 3. Alternatively, the receiver 35 can be connected to, or include any device or system of devices in place of the cable 40, pulley system 52, support 54 or base 56 that is capable of positioning or moving the receiver 35 along a length of the wellbore 10-2.

The variations of the electromagnetic field (electric field and magnetic field) due to the telluric currents can be measured by the receiver system 50 to detect and monitor the formation resistivity distributions, including resistive targets such as hydrocarbons or $CO_2$. The measurements of the electrical and magnetic fields taken by the receiver system 50 can be supplied, by the receiver system 50, as measurement signals through one or more communication links to the receiver station 80, where the measurement signals can be processed and interpreted by a computing device (for example, processor 110, shown in FIG. 5) to reveal resistivity variations between the two surveyed wellbores 10-1, 10-2.

To operate the steel casing 10-1C as a dipole transmitter, the electrode 60 and counter-electrode 70 can be connected to the signal generator 90 and supplied with an electric current by the signal generator 90. The signal generator 90 can include a power supply (not shown) that can supply a voltage to the electrodes 60, 70 to cause a current to flow through the circuit created by the electrode 60, interwell space and counter-electrode 70. The signal generator 90 can include, for example, a pulse-width modulator (PWM) arranged to generate electric pulse signals and supply the modulated (PWM) signal to the electrodes 60, 70 to inject a current into the steel casing 10-1C. The signal generator 90 can be arranged to operate the steel casing 10-1C of the wellbore 10-1 as an electric transmitter by energizing the electrode 60 and the counter-electrode 70, resulting in the current being leaked by the steel casing 10-1C into the formation as telluric currents, and, due to formation resistivity variations, creating variable electric fields that can be measured by the receiver system 50 and interpreted by the receiver station 80 to generate maps of the interwell space, including resistive targets in the space. The electric field, as well as its magnitude, can be adjusted or controlled by adjusting the location of the counter-electrode 70 with respect to the wellbore 10-1, such as, for example, by adjusting the distance between the counter-electrode 70 and the wellbore 10-1, or the angular location of the counter-electrode 70 radially with respect to the wellbore 10-1, such as, for example, an angle between 0° and 360° with respect to a vector having the shortest distance between the wellbores 10-1 and 10-2. In other words, different portions of the interwell space can be illuminated through selective placement of the counter-electrode 70.

For instance, an electric field can be generated with maximum directional vectors along the x-axis toward the receiving wellbore 10-2 by positioning the counter-electrode 70 along a line having the shortest distance between the wellbores 10-1 and 10-2. The electric field generated through the wellbore 10-1C casing can be, under ideal conditions, symmetrical around the wellbore 10-1. From a measurement point of view, the location of the receiver wellbore 10 can determine which geological sections can be mapped with the system.

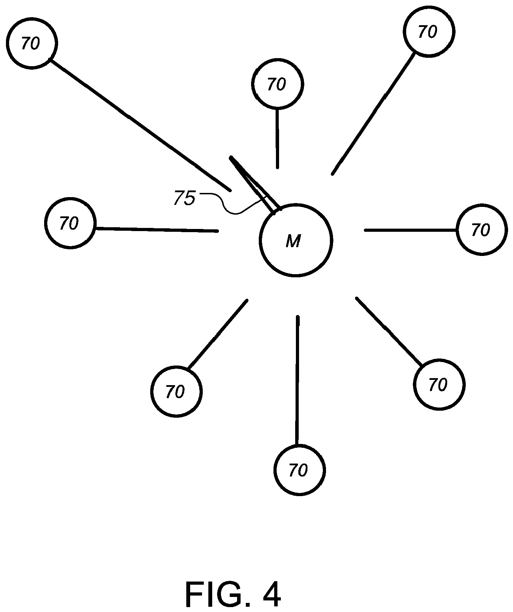

In a nonlimiting embodiment of the system 100, a plurality of counter-electrodes 70 can be strategically positioned and permanently placed surrounding the wellbore 10-1, as seen, for example, in FIG. 4. In this embodiment, the electric field can be adjusted by disconnecting a counter-electrode 70 and connecting an electrical line (not shown) of the signal generator 90 to another one of the plurality of counter-electrodes 70, as discussed below with respect to FIG. 4.

FIG. 3 shows another nonlimiting embodiment of the Xwell CSE field surveying system 100', according to the principles of the disclosure. As seen, the system 100' can be substantially the same as the system 100 (shown in FIG. 2), except that the receiver system 50 includes a receiver electrode 60R and a receiver counter-electrode 70R, and the receiver station 80 is arranged to receive electric field measurement signals from the electrodes 60R, 70R, either directly or indirectly through, for example, a communicating device (not shown), such as, for example, commonly provided with wireless remote terminal units (RTUs) that are used in the oil and gas industry to transmit measurements wirelessly to a remote site. In this embodiment the electrode 60R can be connected to the steel casing 10-2C of wellbore 10-2 and the counter-electrode 70R can be strategically located in the vicinity of the wellbore 10-2. Similar to the transmission counter-electrode 70, the receiver counter-electrode 70R can be adjusted radially around the wellbore 10-2, both in terms of distance and angular placement around a radius circling the wellbore 10-2.

The system 100' (or 100) can be arranged to operate based on the induction principle described by Ampere's law:

$$\nabla \times \vec{B} = \vec{J} + \frac{\partial \vec{E}}{\partial t} \qquad (1)$$

where $\vec{B}$ is the magnetic field, $\vec{E}$ is the electric field and $\vec{J}$ is the current density. This law states that magnetic fields can be generated in two ways: by electric current and by changing electric fields. For conductive targets such as, for example, underground water, there are strong induction effects that can generate large induced electric currents and fast changing electric fields. As a result, large magnetic fields can be produced and can be easily measured by the magnetic receiver 30 (shown in FIG. 1), which can be included in receiver 35 (shown in FIGS. 2 or 3).

For resistive materials, on the other hand, weak induced electric currents and slow varying electric fields can be expected. In this situation, the system 100' (or 100) can be arranged to operate with telluric currents, which can provide for detecting and measuring resistive targets such as hydrocarbons and $CO_2$. In this regard,

the system 100' (or 100) can be arranged to detect and measure telluric currents, as described by Ohm's law:

$$\vec{E} = \rho \vec{J} \qquad (2)$$

where $\rho$ is formation resistivity.

For a same current density, based on Eq. 2, the formation with higher resistivity generates stronger electric fields than the one with lower resistivity. Therefore, resistive targets can be expected to produce large perturbations on electric fields and can be easily detected by electric field receivers such as, for example, electric dipole receivers. In other words, the electric field receiver that includes, for example, an electric dipole receiver, can detect and measure telluric currents, which are sensitive to resistive targets such as hydrocarbons or $CO_2$.

Since tomographic imaging resolution can depend on the length of the wellbore steel casing 10-1C (or 10-2C), the signal generator 90 can be arranged to adjust a property of the signal supplied and injected into the steel casing, such as, for example, the frequency, amplitude or power of the current injected, or the voltage applied to the electrode 60 and counter-electrode 70.

The signal generator 90 can be connected to the receiver station 80 via a communication link, in which case the signal generator 90 can be controlled to vary the properties of the injected signal based on a feedback signal supplied from the receiver station 80, so as to adjust the signal properties for optimal resolution or quality of the detected or measured electric field due to the telluric currents by the receiver system 50.

The system 100' (or 100) can be arranged to perform tomographic mapping, focusing on each single reservoir layer, avoiding issues such as, for example, overburdening strata interference in the measurements, which can be typical of surface monitoring approaches such as, for example, seismic, gravity or EM fields surveying approaches. The receiver 35 (or 30) can be arranged to be lowered below the underground mouth or underground opening of the steel casing 10-2C, which can be located, for example, in a target reservoir. For instance, the magnetic coil receivers (included in receiver 35) can be extended below and outside the steel casing 10-1C to take measurements of the electric field, including variations in the electric field due to the telluric current as it is affected by the resistive bodies. Such an arrangement can provide for unattenuated signal detection and monitoring by the receiver 35.

FIG. 4 shows a nonlimiting embodiment of a switching system that can be included in the system 100 or 100'. The switching system can include a motor M and a switchable contact 75 that can selectively connect to any of the counter-electrodes 70 (or 70R), as seen. The switchable contact 75 can be arranged to connect to an electrical line (not shown) from the signal generator 90 (shown in FIGS. 2 or 3). The motor M can be located atop of or above the wellbore 10 (10-1 or 10-2) and arranged to operate the switchable contact 75 to electrically connect the electrical line (not shown) of the signal generator 90 to any one of the counter-electrodes 70 (or 70R). The motor M can include a controller (not shown) and a power supply (not shown). The motor M can be included in a housing (not shown) with the signal generator 90. The controller can drive the motor M to position and connect the switchable contact 75 to a desired counter-electrode 70 (or 70R). The controller (not shown) can include a transceiver (not shown), which can be arranged to receive instructions from the receiver station 80 (shown in FIGS. 2 or 3) to control the position of the switchable contact 75.

FIG. 5 shows a nonlimiting embodiment of the receiver station 800, constructed according to the principles of the disclosure. As noted above, the receiver station 80 (shown in FIGS. 2 and 3) can include the receiver station 800. The receiver station 800 can be arranged to process and interpret measurement signals from the receiver system 50 (shown in FIGS. 2 or 3) and detect, evaluate and monitor electrical fields to generate resistivity variation maps of the area between two surveyed wellbores 10-1 and 10-2, including reservoir. The receiver station 800 can also be arranged to process and interpret measurement signals from the receiver system 50 and detect, evaluate and monitor magnetic fields in generating the resistivity variation maps, thereby providing enhanced imaging resolution in the resistivity variation maps. The receiver station 800 can be arranged to provide reservoir mapping and monitoring, and to identify bypassed hydrocarbon accumulations, monitor EOR practices (such as, for example, $CO_2$ injection and WAG processes) and ultimately increase recovery of hydrocarbons. The receiver station 800 can be arranged to process and interpret measurements received from the receiver system 50, including deep measurements of fluid saturation, conductive targets (for example, salty water), and resistive targets (for example, hydrocarbons and $CO_2$), and identify and map interwell volumes. Since the electric field transmitter can be triggered through the steel casing 10-1C of an existing wellbore 10-1, costly downhole wireline tool conveyance can be avoided.

The receiver station 800 can include a machine learning platform, such as, for example, an artificial neural network (ANN), a convolutional neural network (CNN), a deep convolutional neural network (DCNN), a recurrent convolutional neural network (RCNN), a Mask-RCNN, a deep convolutional encoder-decoder (DCED), a recurrent neural network (RNN), a neural Turing machine (NTM), a differential neural computer (DNC), a support vector machine (SVM), or a deep learning neural network (DLNN).

The receiver station 800 can include a bus 105, a processor 110 and a storage 120. The receiver station 800 can include a network interface 130, an input-output (IO) interface 140 and a driver unit 150. The receiver station 800 can include an electric field data processing unit 160, a magnetic field data processing unit 170, a tomographic mapping unit 180, and an image rendering unit 190. Each of the components in the receiver station 800 can be connected to a communication link. Although shown as a plurality of separate devices, the components 110 to 190 can be integrated to form fewer than the number of devices seen in FIG. 5.

For instance, in a nonlimiting embodiment, the electric field data processing unit 160, magnetic field data processing unit 170, tomographic mapping unit 180, and image rendering unit 190 can be provided as a single device or as separate computing resources stored in the storage 120 and executable by the processor 110. The components 160-190 can be included in the machine learning platform as separate computing resources that are executable as computing resource processes on the processor 110.

Any one or more of the components 120 to 190 can include a computing device or a computing resource that is separate from the processor 110, as seen in FIG. 5, or integrated or integrateable or executable on the processor 110.

The processor 110 can include any of various commercially available computing devices, including for example, a central processing unit (CPU), a graphic processing unit (GPU), a general-purpose GPU (GPGPU), a field programmable gate array (FGPA), an application-specific integrated circuit (ASIC), a manycore processor, multiple microprocessors, or any other computing device architecture.

The receiver station 800 can include a non-transitory computer-readable storage medium that can hold executable or interpretable computer program code or instructions that, when executed by, for example, the processor 110, causes the steps, processes or methods in this disclosure to be carried out. The computer-readable storage medium can be included in the storage 120.

The storage 120, including any non-transitory computer-readable media, can provide nonvolatile storage of data, data structures, and computer-executable instructions. The storage 120 can accommodate the storage of any data in a suitable digital format. The storage 120 can include one or more computing resources, such as, for example, program modules or software applications that can be used to execute aspects of the architecture included in this disclosure. The storage 120 can include a read-only-memory (ROM) 120A, a random-access-memory (RAM) 110B, a disk drive (DD) 120C, and a database (DB) 120D.

A basic input-output system (BIOS) can be stored in the non-volatile memory 120A, which can include a ROM, such as, for example, an erasable programmable read-only memory (EPROM), an electrically erasable programmable read-only memory (EEPROM) or another type of non-volatile memory. The BIOS can contain the basic routines that help to transfer information between the components in the receiver station 800, such as during start-up.

The RAM 120B can include a high-speed RAM such as static RAM for caching data. The RAM 120B can include, for example, a static random access memory (SRAM), a dynamic random access memory (DRAM), a synchronous DRAM (SDRAM), a non-volatile RAM (NVRAM) or any other high-speed memory that can be adapted to cache data in the receiver station 800.

The DD 120C can include a hard disk drive (HDD), an enhanced integrated drive electronics (EIDE) drive, a solid-state drive (SSD), a serial advanced technology attachments (SATA) drive, or an optical disk drive (ODD). The DD 120C can be arranged for external use in a suitable chassis (not shown). The DD 120C can be connected to the bus 105 by a hard disk drive interface (not shown) or an optical drive interface (not shown), respectively. The hard disk drive interface (not shown) can include a Universal Serial Bus (USB) (not shown), an IEEE 1394 interface (not shown), or any other suitable interface for external applications. The DD 120C can include the computing resources for the electric field data processing unit 160. The DD 120C can be arranged to store data relating to instantiated processes (including, for example, instantiated process name, instantiated process identification number and instantiated process canonical path), process instantiation verification data (including, for example, process name, identification number and canonical path), timestamps, incident or event notifications.

The database (DB) 120D can be arranged to store datasets in digital format, including electric field data and magnetic field data collected by the receiver station 800 from the receiver system 50. The DB 120D can include an inventory of all wellbores 10 in the environment, including the age of each wellbore, the type of wellbore casing 10-1C (or 10-2C) (if any), the dimensions (for example, diameter and length) of the wellbore 10, the dimensions (for example, diameter and length) of the wellbore casing 10-1C (or 10-2C), the geophysical location of each wellbore 10, the operational status of each wellbore 10, or any information that can help in configuring the system 100 (or 100') for optimal image resolution and quality. The DB 120D can include a record for each survey conducted for a given reservoir or interwell region. The DB 120D can include a record for each section of the reservoir or interwell region. The DB 120D can include a training dataset that can be used to train the machine learning platform in the receiver station 800. The DB 120D can include a testing dataset that can be used to train the machine learning model for the machine learning platform. The DB 120D can include a baseline dataset that can be used to build the training dataset.

The DB 120D can be arranged to be accessed by any of the components 105 to 190. The DB 120 D can be arranged to receive queries and, in response, retrieve specific records or portions of records based on the queries and send any retrieved data to the particular component from which the query was received, or to another component at the instruction of the originating component. The DB 120D can include a database management system (DBMS) that can interact with the components 105 to 190. The DBMS can be arranged to interact with computer resourced outside of the receiver station 800, such as, for example, the receiver system 50 or the signal generator 90 (shown in FIGS. 2 and 3). The DBMS can include, for example, SQL, MySQL, Oracle, Postgress, Access, or Unix. The DB 120D can include a relational database.

One or more computing resources can be stored in the storage 120, including, for example, an operating system (OS), an application program, an application program interface (API), a program module, or program data. The computing resource can include an API such as, for example, a web API, a Simple Object Access Protocol (SOAP) API, a Remote Procedure Call (RPC) API, a Representational State Transfer (REST) API, or any other utility or service API. One or more of the computing resources can be cached in the RAM 120B as executable sections of computer program code or retrievable data.

The network interface 130 can be arranged to connect via a network (not shown) to a computing device (not shown), which can be operated by, for example, a field engineer. The network interface 130 can connect to the computing device (not shown) via a wired or a wireless communication network interface (not shown) or a modem (not shown). When used in a LAN, the receiver station 800 can be arranged to connect to the LAN through the wired or wireless communication network interface; and, when used in a wide area network (WAN), the receiver station 800 can be arranged to connect to the WAN network through the modem. The modem (not shown) can be internal or external and wired or wireless. The modem can be connected to the bus 105 via, for example, a serial port interface (not shown).

The IO interface 140 can receive commands or data from an operator. The IO interface 140 can receive commands or data from the computing device (not shown). The IO interface 140 can be arranged to connect to or communicate with one or more input-output devices (not shown), including, for example, a keyboard (not shown), a mouse (not shown), a pointer (not shown), a microphone (not shown), a speaker (not shown), or a display (not shown). The IO interface 140 can include a human-machine-interface (HMI). The received commands or data can be forwarded from the IO interface 140 as instruction or data signals via the bus 105 to any component in the receiver station 800. The IO interface 140 can include a receiver (not shown), a transmitter (not shown) or a transceiver (not shown), which can be arranged to receive electric field data and magnetic field data from the receiver system 50 (shown in FIGS. 2 and 3), or to transmit instructions or data to, for example, the signal generator 90.

The driver unit 150 can include an audio driver 150A and a video driver 150B. The audio driver 150A can include a sound card, a sound driver (not shown), an interactive voice response (IVR) unit, or any other device that can render a sound signal on a sound production device (not shown), such as for example, a speaker (not shown). The video driver 150B can include a video card (not shown), a graphics driver (not shown), a video adaptor (not shown), or any other device necessary to render an image signal on a display device (not shown).

The electric field data processing unit 160 can be arranged to receive electric field measurements from the receiver system 50 (shown in FIGS. 2 and 3), process and interpret the measurements to detect, identify and monitor resistive targets (for example, hydrocarbons or $CO_2$). The electric field data processing unit 160 can be arranged to collect an electric field measurement dataset having, for example, several thousand to hundreds of thousands, or more electric field measurements, and interpret the dataset to provide an interwell resistivity map. The electric field data processing unit 160 can interpret the electric field measurement data by, for example, fitting the measurements to calculated data from a numerical model using an inversion procedure that includes, for example, a finite difference algorithm or any other suitable inversion algorithm to calculate the electric fields in a 2D or 3D rectangular grid. The electric field data processing unit 160 can begin with a resistivity model, which can be derived from prior knowledge of the field area including well logs, geologic and seismic data; and, using the model and inversion process calculate the forward electric field response and then adjust the model parameters until the observed and calculated data fit within a specified tolerance for acceptance. If the inversion process carried out by the electric field data processing unit 160 results in non-unique models for resistivity maps in the interwell space, the electric field data processing unit 160 can apply previously known data, such as, logs, formation tests, or well performance history, and execute reasonable model constraints for fitting the data.

The magnetic field data processing unit 170 can be arranged similar to the electric field data processing unit 160, except that the magnetic field data processing unit 170 is arranged to receive, process and interpret magnetic field measurement data from the measurement signals supplied by the magnetic receiver 30. The magnetic field data processing unit 170 can be arranged to, based on the received measurement signals, detect, identify and monitor conductive targets (for example, water or salty water). The magnetic field data processing unit 170 can be arranged to receive the magnetic field measurements from the magnetic receiver in the receiver system 50 and collect magnetic field measurement datasets having, for example, several thousand to hundreds of thousands, or more magnetic field measurements, and interpret the dataset to provide an interwell conductivity map.

The tomographic mapping unit 180 can be arranged to interact with the electric field data processing unit 160 and the magnetic field data processing unit 170 and generate a composite reservoir map for the interwell space, including interwell conductivity map and interwell resistivity map. The composite reservoir map can provide an accurate, high resolution map of conductive targets and resistive targets in the interwell space.

In a nonlimiting embodiment, the electric field data processing unit 160 and the magnetic field data processing unit 170 can be combined as a single computer resource or computing device.

The image rendering unit 190 can be arranged to communicate with the tomographic mapping unit 180 and generate image rendering commands or data that can be used by, for example, a graphic user interface (GUI) or a computing device (not shown) to render the composite interwell map for the interwell space on a display device (not shown).

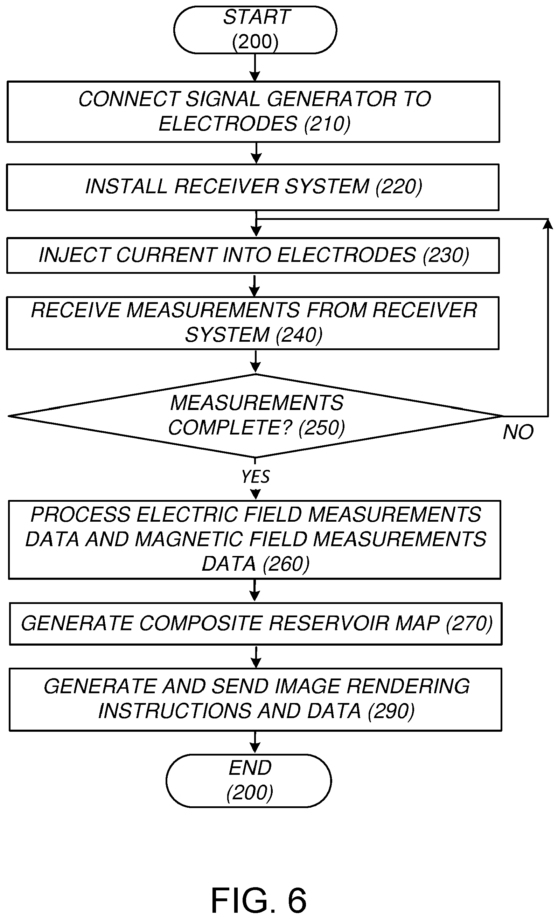

FIG. 6 shows a nonlimiting embodiment of a field surveying process 200 that can be used with the system 100 (shown in FIG. 2) or 100' (shown in FIG. 3). Initially, the signal generator 90 (shown in FIGS. 2 or 3) can be connected to the electrode 60 and counter-electrode 70 (shown in FIGS. 2 or 3) at the wellbore 10-1 (Step 210). Simultaneously, or at a different time, the receiver system 50 (shown in FIGS. 2 or 3) can be installed at the second wellbore 10-2 (Step 220).

The signal generator 90 can be operated to inject a current into the electrodes 60, 70 (Step 230) and, thereby, energize the steel casing 10-1C (shown in FIGS. 2 or 3) as an electric transmitter. The current in the steel casing 10-1C leaks into the interwell formation as a telluric current and, due to formation resistivity variation, forms variable electric fields.

At the second wellbore 10-2, which can be located hundreds or thousands of meters from the wellbore 10-1, the receiver system 50 can detect and measure the electric fields due to the telluric current, including variations in the electric field due to resistive targets within the interwell space (Step 240). As mentioned earlier, the receiver system 50 can include an electric field receiver comprising a capacitive receiver or electric dipoles that can measure the electric fields due to formation telluric currents. As also mentioned earlier, the receiver system 50 can include the magnetic receiver 30 (shown in FIG. 1) that can measure the magnetic field, including any variations in the magnetic field due to resistive (and conductive) targets in the interwell space. The capacitive electric field receiver does not require contact with the rock formations. The electric (and magnetic) field measurements can be supplied to the receiver station 80 (shown in FIGS. 2 or 3), where the collected measurements can be processed and interpreted by the receiver station 80 to generate resistivity variation maps for the interwell space between the surveyed wellbores 10-1 and 10-2.

A determination can be made whether surveying is complete (Step 250), for example, by determining whether a complete dataset of electric field (and magnetic field) measurements has been collected, processed and interpreted by the receiver station 80 (shown in FIGS. 2 or 3). For instance, if measurements of electric (and magnetic) fields have been collected along the entire length of the wellbore 10-2 and a complete reservoir map has been generated by, for example, the tomographic mapping unit 180 (shown in FIG. 5) for the interwell space, a determination can be made that surveying is done and no further measurements are necessary (YES at Step 250). If, however, it is determined that measurements are not complete (NO at Step 250), then the receiver 35 can be moved, for example, up or down along the wellbore 10-2 to the next location and Steps 230-250 repeated. Steps 230 to 250 can be repeated until a complete dataset of electric field (and magnetic field) measurements has been collected (YES at Step 250).

The collected electric field measurements can be processed and interpreted (Step 260), for example, by the electric field data processing unit 160 (shown in FIG. 5), to generate a resistivity map for the interwell space (Step 270). At the same or a different time, collected magnetic field measurements can be processed and interpreted (Step 260), for example, by the magnetic field data processing unit 170 (shown in FIG. 5), to generate the resistivity map (Step 270) or to enhance resolution or confirm detected resistive targets in the interwell space. Image rendering instructions and data can be generated, for example, by the image rendering unit 190 (shown in FIG. 5), based on the reservoir map and sent to a GUI or computing device (not shown) (Step 290), where the reservoir map can be displayed on a display device (not shown).

The terms "a," "an," and "the," as used in this disclosure, means "one or more," unless expressly specified otherwise.

The term "backbone," as used in this disclosure, means a transmission medium or infrastructure that interconnects one or more computing devices or communication devices to provide a path that conveys data packets and instruction signals between the one or more computing devices or communication devices. The backbone can include a network. The backbone can include an Ethernet TCP/IP. The backbone can include a distributed backbone, a collapsed backbone, a parallel backbone or a serial backbone.

The term "bus," as used in this disclosure, means any of several types of bus structures that can further interconnect to a memory bus (with or without a memory controller), a peripheral bus, or a local bus using any of a variety of commercially available bus architectures. The term "bus" can include a backbone.

The term "communicating device," as used in this disclosure, means any computing device, hardware, or computing resource that can transmit or receive data packets, instruction signals or data signals over a communication link. The communicating device can be portable or stationary.

The term "communication link," as used in this disclosure, means a wired or wireless medium that conveys data or information between at least two points. The wired or wireless medium can include, for example, a metallic conductor link, a radio frequency (RF) communication link, an Infrared (IR) communication link, or an optical communication link. The RF communication link can include, for example, WiFi, WiMAX, IEEE 802.11, DECT, 0G, 1G, 2G, 3G, 4G or 5G cellular standards, or Bluetooth. A communication link can include, for example, an RS-232, RS-422, RS-485, or any other suitable interface.

The terms "computer," "computing device," or "processor," as used in this disclosure, means any machine, device, circuit, component, or module, or any system of machines, devices, circuits, components, or modules that are capable of manipulating data according to one or more instructions. The terms "computer," "computing device" or "processor" can include, for example, without limitation, a processor, a microprocessor ($\mu$C), a central processing unit (CPU), a graphic processing unit (GPU), an application specific integrated circuit (ASIC), a compute core, a compute machine, a general purpose computer, a super computer, a personal computer, a laptop computer, a palmtop computer, a notebook computer, a desktop computer, a workstation computer, a server, a server farm, a computer cloud, or an array or system of processors, $\mu$Cs, CPUs, GPUs, ASICs, general purpose computers, super computers, personal computers, laptop computers, palmtop computers, notebook computers, desktop computers, workstation computers, or servers.

The term "computer-readable medium" or "computer-readable storage medium," as used in this disclosure, means any non-transitory storage medium that participates in providing data (for example, instructions) that can be read by a computer. Such a medium can take many forms, including non-volatile media and volatile media. Non-volatile media can include, for example, optical or magnetic disks and other persistent memory. Volatile media can include dynamic random-access memory (DRAM). Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, a carrier wave as described hereinafter, or any other medium from which a computer can read. The computer-readable medium can include a "cloud," which can include a distribution of files across multiple (e.g., thousands of) memory caches on multiple (e.g., thousands of) computers.

Various forms of computer readable media can be involved in carrying sequences of instructions to a computer. For example, sequences of instruction (i) can be delivered from a RAM to a processor, (ii) can be carried over a wireless transmission medium, or (iii) can be formatted according to numerous formats, standards or protocols, including, for example, WiFi, WiMAX, IEEE 802.11, DECT, 0G, 1G, 2G, 3G, 4G, or 5G cellular standards, or Bluetooth.

The term "computing resource," as used in this disclosure, means software, a software application, a web application, a web page, a computer application, a computer program, computer code, machine executable instructions, firmware, or a process that can be arranged to execute on a computing device or a communicating device.

The term "computing resource process," as used in this disclosure, means a computing resource that is in execution or in a state of being executed on an operating system of a computing device. Every computing resource that is created, opened or executed on or by the operating system can create a corresponding "computing resource process." A "computing resource process" can include one or more threads, as will be understood by those skilled in the art.

The term "database," as used in this disclosure, means any combination of software or hardware, including at least one computing resource or at least one computer. The database can include a structured collection of records or data organized according to a database model, such as, for example, but not limited to at least one of a relational model, a hierarchical model, or a network model. The database can include a database management system application (DBMS). The at least one application may include, but is not limited to, a computing resource such as, for example, an application program that can accept connections to service requests from communicating devices by sending back responses to the devices. The database can be configured to run the at least one computing resource, often under heavy workloads, unattended, for extended periods of time with minimal or no human direction.

The terms "including," "comprising" and variations thereof, as used in this disclosure, mean "including, but not limited to," unless expressly specified otherwise.

The term "server," as used in this disclosure, means any combination of software or hardware, including at least one computing resource or at least one computer to perform services for connected communicating devices as part of a client-server architecture. The at least one server application can include, but is not limited to, a computing resource such as, for example, an application program that can accept connections to service requests from communicating devices by sending back responses to the devices. The server can be configured to run the at least one computing resource, often under heavy workloads, unattended, for extended periods of time with minimal or no human direction. The server can include a plurality of computers configured, with the at least one computing resource being divided among the computers depending upon the workload. For example, under light loading, the at least one computing resource can run on a single computer. However, under heavy loading, multiple computers can be required to run the at least one computing resource. The server, or any if its computers, can also be used as a workstation.

Devices that are in communication with each other need not be in continuous communication with each other, unless expressly specified otherwise. In addition, devices that are in communication with each other may communicate directly or indirectly through one or more intermediaries.

Although process steps, method steps, algorithms, or the like, may be described in a sequential or a parallel order, such processes, methods and algorithms may be configured to work in alternate orders. In other words, any sequence or order of steps that may be described in a sequential order does not necessarily indicate a requirement that the steps be performed in that order; some steps may be performed simultaneously. Similarly, if a sequence or order of steps is described in a parallel (or simultaneous) order, such steps can be performed in a sequential order. The steps of the processes, methods or algorithms described herein may be performed in any order practical.

When a single device or article is described herein, it will be readily apparent that more than one device or article may be used in place of a single device or article. Similarly, where more than one device or article is described herein, it will be readily apparent that a single device or article may be used in place of the more than one device or article. The functionality or the features of a device may be alternatively embodied by one or more other devices which are not explicitly described as having such functionality or features.

The subject matter described above is provided by way of illustration only and should not be construed as limiting. Various modifications and changes can be made to the subject matter described herein without following the example embodiments and applications illustrated and described, and without departing from the true spirit and scope of the invention encompassed by the present disclosure, which is defined by the set of recitations in the following claims and by structures and functions or steps which are equivalent to these recitations.

**Claims**

1. A method for locating and evaluating resistive targets in a space between a pair of wellbores, at least one of which includes a metallic casing, the method comprising:

   injecting an electric current into the metallic casing of one of the pair of wellbores to energize the metallic casing as a dipole transmitter and leak the current into a formation to form variable electric fields;

   detecting, inside the other wellbore of the pair, by an electric field receiver, the variable electric fields; and

   measuring, by the electric field receiver, the variable electric fields as a function of time; and generating a resistivity map of the formation based on the measurements of the variable electric fields.

2. The method in claim 1, further comprising:

forming a telluric electrical circuit.

3. The method in claim 1, further comprising:

installing a counter-electrode within a predetermined distance of said one of the pair of wellbores.

4. The method in claim 3, further comprising:

connecting a power supply to the metallic casing of said one of the pair of wellbores.

5. The method in claim 3, wherein the metallic casing of said one of the pair of wellbores, the formation and the counter-electrode form a telluric electrical circuit.

6. A system for locating and evaluating resistive targets in a space between a pair of wellbores, at least one of which includes a metallic casing, the system comprising:

an electrode arranged to connect to the metallic casing of one of the pair of wellbores to energize the metallic casing as a dipole transmitter and leak a current into a formation to form variable electric fields;
a counter-electrode located within a predetermined distance, the counter-electrode being arranged to receive the current; and
an electric field receiver located in another of the pair wellbores, the electric field receiver being arranged to detect and measure the variable electric fields to detect and measure resistive targets in the formation.

7. The method of claim 1 or the system in claim 6, wherein the electric field receiver comprises an electric dipole receiver.

8. The method of claim 1 or the system in claim 6, wherein the electric field receiver comprises a capacitive receiver that does not contact the formation.

9. The system in claim 6, further comprising:

a telluric electrical circuit through which the current travels.

10. The system in claim 9, wherein the telluric electrical circuit comprises the metallic casing of said one of the pair of wellbores, the formation and the counter-electrode.

11. The method of claim 3 or the system in claim 6, wherein the predetermined distance is between 10 meters and 20 meters.

12. The method of claim 3 or the system in claim 6, wherein the predetermined distance is between 20 meters and 30 meters.

13. The method of claim 3 or the system in claim 6, wherein the predetermined distance is between 30 meters and 1,000 meters.

14. The system in claim 6, further comprising:

a power supply arranged to connect to the metallic casing of said one of the pair of wellbores.

15. The system in claim 14, wherein the power supply is further arranged to connect to the counter-electrode.

FIG. 1

EP 3 943 985 A1

FIG. 2

FIG. 3

FIG. 4

PROCESSOR
(110)

STORAGE (120)

ROM (120A)

RAM (120B)

HDD (120C)

DB (120D)

NETWORK INTERFACE
(130)

IO INTERFACE (140)

DRIVER UNIT (150)

AUDIO DRIVER (150A)

VIDEO DRIVER (150B)

105

800

ELECTRIC FIELD DATA
PROCESSING UNIT
(160)

MAGNETIC FIELD DATA
PROCESSING UNIT
(170)

TOMOGRAPHIC
MAPPING UNIT
(180)

IMAGE RENDERING
UNIT
(190)

FIG. 5

FIG. 6

Europäisches
Patentamt
European
Patent Office
Office européen
des brevets

**EUROPEAN SEARCH REPORT**

Application Number

EP 21 18 5559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/038492 A1 (NIEUWENHUIS GREG [US] ET AL) 9 February 2017 (2017-02-09) | 1-6,9, 10,14,15 | INV. G01V3/22 |
| Y | * paragraphs [0014], [0025], [0028], [0003], [0029], [0042], [0013]; claims 1, 3 * | 8 | G01V3/24 |
| X | Clifford J Schenkel: "The electrical resistivity method in cased boreholes", , 1 May 1991 (1991-05-01), XP055300955, Retrieved from the Internet: URL:http://www.osti.gov/scitech/servlets/purl/5185469 [retrieved on 2016-09-08] | 1-3,5,6, 9,10, 13-15 | |
| Y | * abstract, second page, second paragraph ; page 92 section 5.1 ; page 117 ; page 118, first two paragraphs ; section 7.1. ; page 226, second paragraph and following; figures 5.5.1-5.5.2 * | 11,12 | |
| X | US 5 914 603 A (DAILY WILLIAM D [US] ET AL) 22 June 1999 (1999-06-22) * col. 2, l. 20-46 ; col. 3, l. 38; claim 1 * | 1,7 | TECHNICAL FIELDS SEARCHED (IPC) |
| Y | US 2019/162872 A1 (MORRISON H FRANK [US] ET AL) 30 May 2019 (2019-05-30) * paragraph [0052] * | 8 | G01V |
| Y | US 2015/219784 A1 (HIBBS ANDREW D [US] ET AL) 6 August 2015 (2015-08-06) * paragraph [0030]; claim 24 * | 11,12 | |
| X | US 5 218 301 A (KUCKES ARTHUR F [US]) 8 June 1993 (1993-06-08) * col. 5 l. 54-64: ; col. 6, l. 31-39 ; col. 6 l. 16-20 and col. 6, l. 53-57; claim 7; figure 1 * | 6 | |

-/--

The present search report has been drawn up for all claims

| Place of search | Date of completion of the search | Examiner |
|---|---|---|
| The Hague | 25 November 2021 | Pitzer, Hanna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 21 18 5559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/117647 A2 (SCHLUMBERGER CA LTD [CA]; SCHLUMBERGER TECHNOLOGY BV [NL] ET AL.) 14 October 2010 (2010-10-14) * paragraphs [0027], [0023], [0021], [0018]; claims 1, 2, 4, 7 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 25 November 2021 | Pitzer, Hanna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 5559

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2021

| Patent document cited in search report | | Publication date | Patent family member(s) | | Publication date |
|---|---|---|---|---|---|
| US 2017038492 | A1 | 09-02-2017 | NONE | | |
| US 5914603 | A | 22-06-1999 | NONE | | |
| US 2019162872 | A1 | 30-05-2019 | CA | 3034906 A1 | 08-03-2018 |
| | | | US | 2019162872 A1 | 30-05-2019 |
| | | | WO | 2018045331 A1 | 08-03-2018 |
| US 2015219784 | A1 | 06-08-2015 | AU | 2013312740 A1 | 26-03-2015 |
| | | | BR | 112015004945 A2 | 04-07-2017 |
| | | | CA | 2883944 A1 | 13-03-2014 |
| | | | GB | 2520891 A | 03-06-2015 |
| | | | MX | 341811 B | 05-09-2016 |
| | | | RU | 2015107722 A | 27-10-2016 |
| | | | US | 2015219784 A1 | 06-08-2015 |
| | | | WO | 2014039618 A2 | 13-03-2014 |
| US 5218301 | A | 08-06-1993 | NONE | | |
| WO 2010117647 | A2 | 14-10-2010 | US | 2010259267 A1 | 14-10-2010 |
| | | | WO | 2010117647 A2 | 14-10-2010 |

EPO FORM P0459

For more details about this annex : see Official Journal of the European Patent Office, No. 12/82